# EUROPÄISCHE PATENTANMELDUNG

(11) **EP 4 650 822 A1**
(43) Veröffentlichungstag der Anmeldung: **19.11.2025**
(21) Anmeldenummer: 25174969.3
(22) Anmeldetag: 08.05.2025
(51) Int. Cl.: G01S 7/481, G01S 7/4863, G01S 17/42, G01S 17/89

(54) **SCANVORRICHTUNG**

(30) Priorität: 17.05.2024 DE 102024113999
(71) Anmelder: SICK AG, 79183 Waldkirch (DE)
(72) Erfinder: FÖLLING, Jonas, 79100 Freiburg (DE)
(74) Vertreter: Manitz Finsterwald Patent- und Rechtsanwaltspartnerschaft mbB

(57) **Zusammenfassung**

Die vorliegende Erfindung betrifft eine Scanvorrichtung, insbesondere einen Laserscanner. Die Scanvorrichtung umfasst eine Detektoranordnung mit einer Mehrzahl von optischen Detektoren, ein Scanmodul, welches dazu ausgebildet ist, die Position und/oder Ausrichtung des Sichtfelds der Detektoranordnung zu variieren, um einen entsprechenden Scanbereich zu definieren, und eine Auswerteinheit, welche dazu ausgebildet ist, aus den kombinierten Detektionssignalen der Detektoren der Detektoranordnung Informationen zu Objekten im Scanbereich der Scanvorrichtung zu gewinnen. Die optischen Detektoren der Detektoranordnung sind erfindungsgemäß in Gestalt wenigstens zweier identisch zueinander ausgerichteter Detektorarrays mit jeweils wenigstens drei linear aneinander gereihten optischen Detektoren ausgebildet. Die besagten Detektorarrays sind erfindungsgemäß auf einem gemeinsamen Kreisring angeordnet, welcher sich senkrecht zur gemeinsamen Ausrichtung der besagten Detektorarrays erstreckt.

## Beschreibung

Die vorliegende Erfindung betrifft Scanvorrichtungen, insbesondere Laserscanner zum periodischen Scannen eines definierten Scan- bzw. Überwachungsbereichs.

Herkömmliche Scanvorrichtungen umfassen regelmäßig eine Detektoranordnung mit einer Mehrzahl von optischen Detektoren. Um mit einer solchen Scanvorrichtung einen Scanbereich abtasten zu können, welcher größer und/oder dichter ist, als das einfache Sichtfeld der Detektoranordnung ist, ist es bekannt, ein Scanmodul vorzusehen, um das Sichtfeld der Detektoranordnung zu variieren. Beispielsweise kann das Scanmodul eine Drehung der Detektoranordnung bewirken. Die damit erhaltene Variation des Sichtfelds gegenüber einer festen Basis der Scanvorrichtung definiert einen Scanbereich der Scanvorrichtung. Eine ferner vorgesehene Auswerteinheit dient schließlich dazu, aus den kombinierten (beispielsweise in Gestalt einer 3D-Punktewolke) Detektionssignalen der unterschiedlichen Detektoren der Detektoranordnung verschiedene Informationen zu Objekten innerhalb des Scanbereichs zu gewinnen. Zu diesen Informationen zählen regelmäßig insbesondere Abstandsinformationen. Alternativ und/oder ergänzend dazu wäre jedoch auch die Gewinnung von anderen Informationen zur Oberflächenbeschaffenheit, wie der Farbe, der Rauigkeit und/oder dem Material, von Objekten im Scanbereich der Scanvorrichtung denkbar.

Es ist wünschenswert, mit der Detektoranordnung möglichst genau Informationen des Scanbereichs zu erfassen.

Eine Aufgabe der vorliegenden Erfindung ist die Bereitstellung einer Scanvorrichtung mit einer besonders effizienten Ausgestaltung der Detektoranordnung bei besonders feiner Abtastung des jeweiligen Scanbereichs.

Diese Aufgabe wird durch die Scanvorrichtung gemäß Anspruch 1 gelöst. Vorteilhafte Weiterbildungen sind in den abhängigen Ansprüchen definiert.

Die erfindungsgemäße Scanvorrichtung zeichnet sich dadurch aus, dass die optischen Detektoren der Detektoranordnung in Gestalt wenigstens zweier separater identisch ausgerichteter Detektorarrays mit jeweils wenigstens drei linear aneinander gereihten optischen Detektoren ausgebildet sind. Erfindungsgemäß sind die besagten Detektorarrays auf einem gemeinsamen Kreisring angeordnet, welcher sich senkrecht zur gemeinsamen Ausrichtung der besagten Detektorarrays erstreckt.

Unter der Formulierung "Detektorarray" wird vorliegend ein kombiniertes Modul mit einer Mehrzahl von Detektoren verstanden, welche alle parallel zueinander ausgerichtet und schachbrettartig (bzw. in Reihe) auf einer gemeinsamen Trägerplatte angeordnet sind. Üblicherweise weist ein solches Detektorarray für die Gesamtheit seiner einzelnen Detektoren einen gemeinsamen Datenausgang auf. Diesem kann eine interne Verarbeitungseinheit vorgeschaltet sein, welche aus den einzelnen Detektorsignalen ein kombiniertes Ausgangssignal, insbesondere in digitaler Form, bildet. Kombiniert bedeutet hierbei, dass die Signale der einzelnen Pixel noch immer den jeweiligen Pixeln zugeordnet werden können und nicht aufsummiert sind. Ein Pixel kann aus weiteren Untereinheiten bestehen, deren Signale aufsummiert das Signal des Pixels ergeben (z.B. ein SiPM). Die einzelnen Detektoren des Detektorarrays definieren jeweils das Detektionssignal eines Pixels des jeweiligen Detektorarrays. Klassische Pixelzahlen solcher Detektorarrays sind Potenzen von zwei, wie beispielsweise 8, 16, 64, 128, 254. Die Länge entsprechender Arrays liegt für den vorgesehenen Einsatz regelmäßig im Millimeter-Bereich, während der Außendurchmesser des gemeinsamen Kreisrings regelmäßig im Zentimeter-Bereich liegt. Bei einer entsprechenden Scanbewegung ist es nicht notwendig, innerhalb des gemeinsamen Kreisrings weitere optische Detektoren vorzusehen. Insbesondere sind innerhalb des gemeinsamen Kreisrings keine weiteren optischen Detektoren vorgesehen. Hier kann beispielsweise eine Steuerplatine der Scanvorrichtung und/oder der Detektoranordnung und/oder eine Leuchtmittelanordnung zum Ausleuchten des Sichtfelds der Detektoranordnung vorgesehen werden.

Unter der gemeinsamen Ausrichtung der Detektorarrays ist vorliegend die gemeinsame Blickrichtung der einzelnen Detektoren der vorgesehen Detektorarrays zu verstehen. In Fig. 1 verläuft diese in der Bildebene horizontal, während sie in den Figuren 2 und 3 senkrecht zu Bildebene verläuft. Die Detektorarrays erstrecken sich jeweils senkrecht zu der besagten Ausrichtung.

Die Verwendung von Detektorarrays ermöglicht eine besonders dichte Packung der einzelnen Detektoren der Detektoranordnung und damit die Minimierung des Spaltmaßes zwischen den einzelnen Pixeln der Detektoranordnung. Die spezifische Anordnung dieser Detektorarrays auf einem gemeinsamen Kreisring führt zu einer Querstellung der einzelnen Detektorarrays relativ zu einer Scanrichtung der Scanvorrichtung in unterschiedlichen Winkeln.

Die Scanrichtung entspricht der Richtung einer vorgesehenen Bewegung des Sichtfelds der Detektoranordnung. Die einzelnen Detektorarrays können, wie erwähnt, schräg zur Scanrichtung angeordnet sein, beispielsweise in einem Winkel zwischen 20° und 70° zur Scanrichtung, bevorzugt zwischen 30° und 60°. Verschiedene Detektorarrays können (in Draufsicht) zueinander parallel oder orthogonal angeordnet sein. Diese Schrägstellung erlaubt es, insbesondere in Kombination mit der besonders dichten Packung der Detektoren in Gestalt der Detektorarrays, einen lückenlos geschlossenen Scanbereich besonders detailliert abzubilden, da in Scanrichtung gesehen mehr Pixel angeordnet werden können, als bei einer Anordnung ohne Schrägstellung zur Scanrichtung.

Damit unterscheidet sich die erfindungsgemäße Ausgestaltung sowohl hinsichtlich Ausgestaltung als auch hinsichtlich Effizienz von Ausgestaltungen mit lediglich einem einzelnen großen Detektorarray, welcher in einem bestimmten Winkel zu einer Scanrichtung schräggestellt ist, und von Ausgestaltungen, in welcher eine Mehrzahl von einzelnen Detektoren entlang einer Kreislinie angeordnet sind. Die vorliegende Erfindung ist vielmehr eine besondere Kombination einzelner Aspekte dieser beiden Ansätze.

Insbesondere handelt es sich bei der Scanvorrichtung um einen Laserscanner oder ein LIDAR (Light Detection and Ranging). Die Scanvorrichtung kann einen Lichtsender umfassen, welcher Sendelicht in die Umgebung der Scanvorrichtung aussendet, wobei das Sendelicht von Objekten in der Umgebung als Empfangslicht zurückgeworfen (z.B. remittiert) wird. Das Empfangslicht kann dann durch die hierin beschriebene Optik auf die Detektoranordnung projiziert bzw. abgebildet werden. Insbesondere ist die Scanvorrichtung ausgebildet, aus einer Lichtlaufzeit des Sende- und/oder Empfangslichts Abstandsinformationen zu den Objekten in der Umgebung zu ermitteln.

Bevorzugt handelt es sich bei den Detektorarrays der Detektoranordnung um 1D-Arrays von Detektoren, insbesondere jeweils (also pro Array) auf einem einzelnen Halbleitersubstrat. Bevorzugt sind die einzelnen Detektoren in Gestalt von nicht aufgelösten Unterarrays von CMOS-Sensoren und/oder von Avalanche-Photodioden ausgebildet.

Derartige Ausgestaltungen sind besonders dicht zu packen und liefern damit ein Sichtfeld mit minimalen Abständen zwischen aufgelösten Bereichen. Unter nicht aufgelösten Unterarrays werden Gruppen von Detektoren eines Detektorarrays verstanden, welche ein gemeinsames Detektionssignal ausgeben. Konkret kann jeder "Detektor" eines Detektorarrays selbst ein sog. "Unterarray" aus einzelnen Sensoren sein. Sobald wenigstens eines dieser Sensoren eine Detektion erfasst, gibt das gesamte Unterarray ein entsprechendes Detektionssignal aus. Wie viele und/oder welche der einzelnen Sensoren die Detektion erfasst haben, ist aus dem ausgegebenen Detektionssignal des Unterarrays nicht notwendigerweise herleitbar.

Bevorzugt umfassen die Detektorarrays der Detektoranordnung jeweils 16 bis 128, beispielsweise 64, Pixel bzw. Detektoren, jeweils insbesondere mit einer Länge von wenigen Millimetern, insbesondere 1mm bis 20mm. Bevorzugt beträgt der Außendurchmesser des gemeinsamen Kreisrings wenige Zentimeter, insbesondere 1cm bis 5cm.

Die Pixelzahl der Detektorarrays entspricht der Zahl der aufgelösten Detektoren des Detektorarrays. Bei der oben beschriebenen Ausgestaltung mit Unterarrays von CMOS-Sensoren oder Avalanche Photodioden entspricht die Pixelzahl folglich der Zahl von Unterarrays aus CMOS-Sensoren oder Avalanche-Photodioden und nicht dem Produkt aus der Zahl der vorgesehenen Unterarrays von CMOS-Sensoren oder Avalanche-Photodioden und der Zahl der einzelnen CMOS-Sensoren oder Avalanche-Photodioden pro Unterarray. Entsprechende Ausgestaltungen sind besonders kompakt und liefern dennoch eine hohe Auflösung.

Bevorzugt ist innerhalb des gemeinsamen Kreisrings der Detektorarrays eine Platine vorgesehen, welche elektronische Bauteile, insbesondere eine Steuereinheit, Auswerteeinheit und/oder eine Leuchtmittelanordnung, umfasst, welche von den beschriebenen Detektorarrays verschieden sind.

Dies ermöglicht einer besonders kompakte Gesamtausgestaltung der Sensoreinheit bei ausreichend hoher Auflösung.

Bevorzugt sind die Detektorarrays der Detektoranordnung auf dem gemeinsamen Kreisring derart angeordnet, dass diese in wenigstens einer Querprojektion des gemeinsamen Kreisrings dessen gesamten Außendurchmesser überspannen.

Mit anderen Worten, die Detektorarrays sind derart angeordnet, dass diese in der Ebene des Kreisrings die gesamte Breite des Kreisrings abdecken. Dies ermöglicht besonders kompakte Gesamtausgestaltungen der Detektoranordnung und damit der gesamten Scanvorrichtung.

Bevorzugt umfasst die Detektoranordnung mehr als zwei Detektorarrays, insbesondere ein gerades Vielfaches an Detektorarrays, wie beispielsweise vier, sechs oder acht entsprechende Detektorarrays, welche auf dem gemeinsamen Kreisring angeordnet sind.

Dies ermöglicht die Bildung eines besonders schmalen gemeinsamen Kreisrings und damit besonders kompakte Gesamtausgestaltungen. Auch kann über die Mehrzahl von Detektorarrays eine weiter verbesserte Auflösung erhalten werden, wenn die entsprechenden Detektorarrays quer zu einer vorgesehenen Scanrichtung an einander gegenüberliegenden Abschnitten des gemeinsamen Kreisrings mit einem geeigneten Höhenversatz angeordnet sind. Insbesondere beträgt dieser Höhenversatz die halbe Höhe eines Detektors bzw. Pixels quer zur vorgesehenen Scanrichtung. Beispielsweise können zwei (in Draufsicht) parallel angeordnete Detektorarrays so angeordnet sein, dass zwei sich bezüglich des Kreisrings orthogonal gegenüberliegende Detektoren bzw. Pixel um die Größe eines halben Detektors bzw. Pixels gegeneinander verschoben sind.

Bevorzugt sind die Detektorarrays der Detektoranordnung derart angeordnet, dass die Breite des aufgespannten gemeinsamen Kreisrings kleiner-gleich der Hälfte, einem Drittel, einem Viertel und/oder einem Fünftel des halben Innendurchmessers des aufgespannten Kreisrings ist. Ergänzend oder alternativ dazu sind die Detektorarrays der Detektoranordnung bevorzugt derart angeordnet, dass der Innendurchmesser des aufgespannten gemeinsamen Kreisrings größer als die Hälfte, zwei Drittel und/oder fünf Sechstel des Außendurchmessers des aufgespannten Kreisrings ist.

Entsprechende Ausgestaltungen erlauben eine besonders kompakte Ausgestaltung bei ausreichend hoher Auflösung.

Bevorzugt sind die Detektorarrays der Detektoranordnung gleichmäßig entlang wenigstens einer Hälfte des Umfangs des gemeinsamen Kreisrings, insbesondere entlang des gesamten Umfangs des gemeinsamen Kreisrings angeordnet.

Dies ermöglicht eine maximale Auflösung bei minimaler Ausdehnung der Detektoranordnung und damit der Scanvorrichtung.

Bevorzugt sind wenigstens zwei Detektorarrays der Detektoranordnung relativ zu einer Radialachse des gemeinsamen Kreisrings einander gegenüberliegend angeordnet, in Bezug auf die besagte Radialachse betrachtet jedoch insbesondere in einem Höhenversatz, welcher kleiner als die effektive Pixelhöhe quer zu dieser Radialachse ist.

Dies ermöglicht eine besonders hohe Auflösung mit einer gewissen Redundanz zur Identifizierung und/oder Korrektur einzelner Pixelfehler der einander gegenüberliegenden Detektorarrays. Die Radialachse ist dabei bevorzugt parallel zur vorgesehenen Scanrichtung der Scanvorrichtung ausgerichtet.

Bevorzugt sind die unterschiedlichen Detektorarrays der Detektoranordnung über verschiedene Sektoren des gemeinsamen Kreisrings gespannt. Die unterschiedlichen derart aufgespannten Sektoren überschneiden sich bevorzugt nicht oder nicht wesentlich. Bevorzugt definieren die einzelnen Sektoren zusammen einen geschlossenen Kreisring.

Als nicht wesentliche Überschneidung ist ein Überschnitt kleiner-gleich der Ausdehnung eines einzelnen Pixels der jeweiligen Detektorarrays verstanden. Derartige Ausgestaltungen erlauben eine besonders hohe Auflösung bei minimaler räumlicher Ausdehnung.

Bevorzugt sind wenigstens zwei der Detektorarrays gegenüber wenigstens einer Radialachse des gemeinsamen Kreisrings in zwei unterschiedlichen Winkeln angeordnet, wobei sich die beiden unterschiedlichen Winkel in Bezug auf die besagte Radialachse insbesondere lediglich in ihrem Vorzeichen voneinander unterscheiden.

Die unterschiedliche Ausrichtung der Detektorarrays ermöglicht die Umsetzung einer besonders kompakten Detektoranordnung bei minimaler Breite des gemeinsamen Kreisrings. Zwei entsprechende Winkel sich lediglich in ihrem Vorzeichen voneinander unterscheiden zu lassen ermöglicht es, bei einer Scanrichtung entlang der besagten Radialachse sicherzustellen, dass beide Sensorarrays dieselbe Auflösung quer zur Scanrichtung aufweisen. Dies erleichtert die kombinierte Auswertung der Detektionssignale der jeweiligen Detektorarrays.

Bevorzugt umfasst das Scanmodul wenigstens einen Aktuator zur unmittelbaren Bewegung der Detektorarrays der Detektoranordnung und/oder eine Abbildungseinheit, insbesondere mit einem Drehspiegel oder einem Facettenspiegelrad, sowie wenigstens einen zugehörigen Aktuator, um lediglich das Sichtfeld der Detektoranordnung, insbesondere periodisch und insbesondere im Wesentlichen rotatorisch, zu verfahren.

Derartige Ausgestaltungen sind besonders kompakt und zuverlässig auszubilden.

Bevorzugt umfasst die Scanvorrichtung eine Leuchtmittelanordnung, welche dazu ausgebildet ist, den Scanbereich der Scanvorrichtung auszuleuchten. Bevorzugt ist die Leuchtmittelanordnung derart ausgebildet ist und/oder mit einer zugehörigen Abbildungseinheit ausgestattet, dass diese im Wesentlichen lediglich das Sichtfeld der Detektoranordnung ausleuchtet.

Dies ermöglicht eine besonders effiziente gezielte Ausleuchtung des Scanbereich bzw. des Sichtfelds der Detektoranordnung. Dies wiederum ermöglicht eine verbesserte Auflösung bei ausreichender Augensicherheit durch die Vermeidung oder zumindest Reduktion unnötiger Ausleuchtung von Bereichen jenseits des Scanbereichs der Scanvorrichtung oder gar jenseits des Sichtfelds der Detektoranordnung.

Bevorzugt umfasst die Leuchtmittelanordnung wenigstens ein Leuchtmittel, welches entsprechend wenigstens einem der vorgesehenen Detektorarrays und/oder des gemeinsamen Kreisrings der Detektorarrays der Detektoranordnung angeordnet ist.

Beispielsweise kann die Scanvorrichtung ein Leuchtmittel umfassen, welches in einem Kreisring Licht emittiert, welcher konzentrisch mit dem gemeinsamen Kreisring der Detektorarrays ist. Auch könnte die Leuchtmittelanordnung beispielsweise eine Mehrzahl von Leuchtmittelarrays umfassen, von denen jeweils wenigstens eines zumindest parallel zu wenigstens einem zugehörigen der vorgesehenen Detektorarrays der Detektoranordnung ausgerichtet ist. Alternativ dazu ist beispielsweise auch eine Leuchtmittelanordnung möglich, welche im Wesentlichen den gesamten Scanbereich oder im Wesentlichen lediglich einen Bereich, welcher das Sichtfeld der Detektoranordnung umspannt, ausleuchtet. Eine entsprechend fokussierte Ausleuchtung ermöglicht die Einsparung von Energie und erleichtert die Gewährleistung der Einhaltung von Vorgaben zur Augensicherheit der schließlich gebildeten Scanvorrichtung durch Reduktion der gesamten bereitgestellten Beleuchtungsstärke.

Bevorzugt umfasst die Scanvorrichtung wenigstens eine Optik, insbesondere mit wenigstens, alternativ insbesondere genau, einer Linse und/oder wenigstens einem Parabolspiegel. Insbesondere ist wenigsten ein Feldblendenarray zwischen der Optik (7) und der Detektoranordnung in der Fokalebene der Optik (7) positioniert.

Entsprechende Optiken ermöglichen eine gezielte Führung von ausgehenden und eingehenden Lichtstrahlen innerhalb der Scanvorrichtung und ermöglich damit besonders kompakte und effiziente Gesamtausgestaltungen für die Scanvorrichtung. Bei einer vorgesehenen Leuchtmittelanordnung können für diese und für die Detektoranordnung je nach räumlicher Ausgestaltung gemeinsame und/oder separate Optiken vorgesehen sein. Bevorzugt bildet die vorgesehene Optik lediglich auf einen Kreisring scharf ab. Dieser scharf abgebildete Kreisring umfasst oder entspricht bevorzugt dem gemeinsamen Kreisring der Detektorarrays. Das Feldblendenarray umfasst bevorzugt für jeden einzelnen Pixel bzw. Detektor der Detektoranordnung eine eigene Öffnung. Bevorzugt sind die besagten Öffnungen jeweils genau mittig über dem zugehörigen Pixel bzw. Detektor angeordnet. Dies ermöglicht eine bessere Untergliederung des Sichtfeldes der Detektoranordnung und Separierung der jeweiligen Eingangssignale.

Durch eine lediglich auf einen Kreisring scharf abbildenden Optik ergibt sich der Vorteil einer einfachen und kostengünstigen Optik. Bevorzugt liegt der gemeinsame Kreisring zumindest teilweise oder vollständig innerhalb des scharf abgebildeten Kreisrings, sodass auf die Detektorarrays scharf abgebildet wird. Innerhalb und außerhalb des gemeinsamen Kreisrings kann eine unscharfe Abbildung bzw. Projektion erfolgen.

Nachfolgend wird die Erfindung rein beispielhaft unter Bezugnahme auf die Zeichnungen beschrieben. Es zeigt:

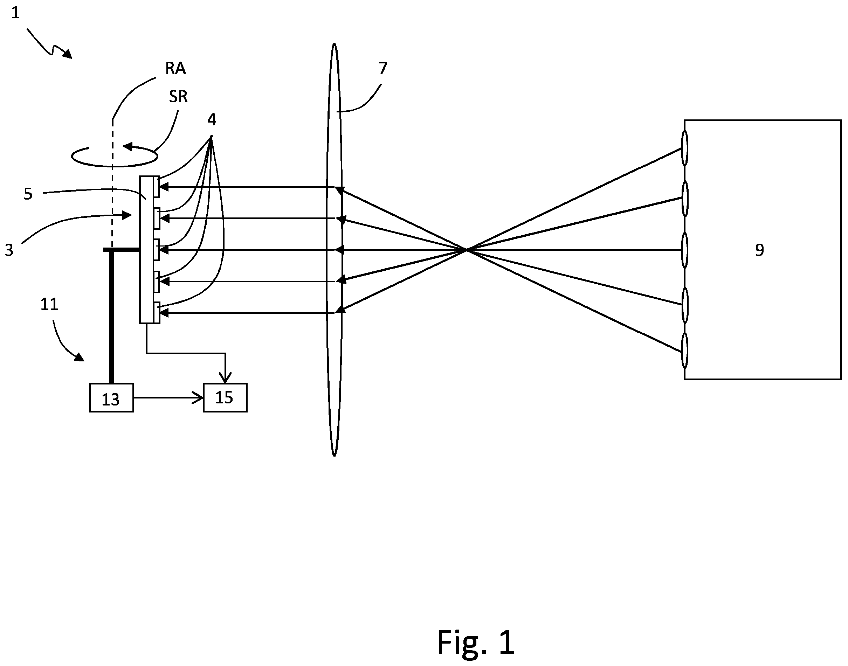

- Fig. 1: schematisch den Aufbau einer beispielhaften Scanvorrichtung im Sinne der vorliegenden Erfindung;

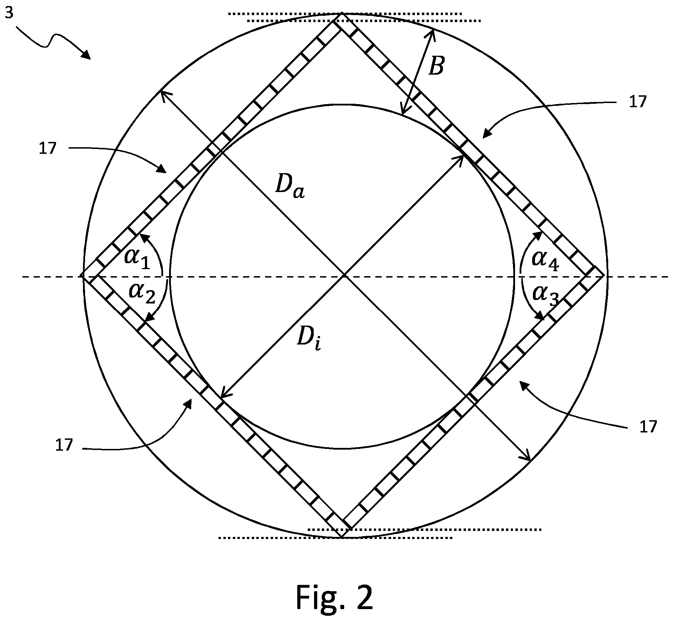

- Fig. 2: schematisch eine Frontalansicht einer ersten beispielhaften Detektoranordnung einer Scanvorrichtung gemäß der vorliegenden Erfindung; und

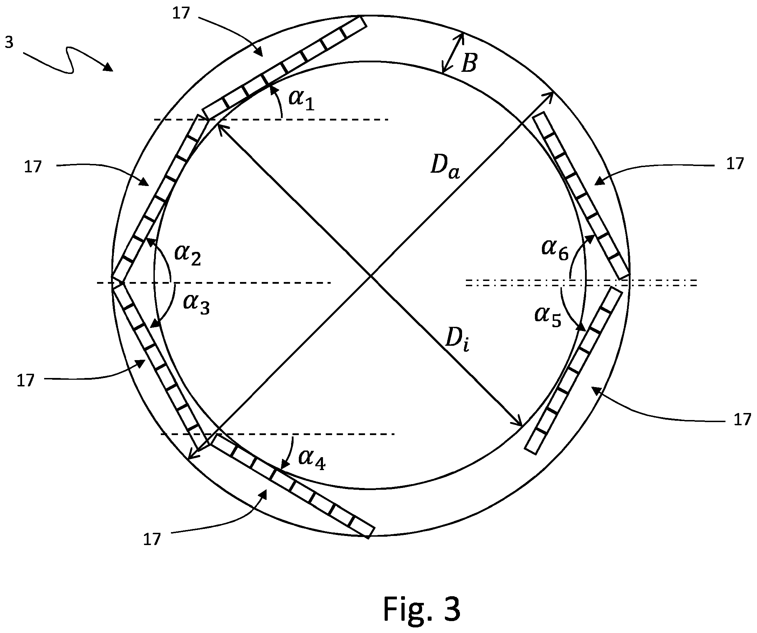

- Fig. 3: schematisch eine Frontansicht einer zweiten beispielhaften Detektoranordnung einer Scanvorrichtung gemäß der vorliegenden Erfindung.

Entsprechend Fig. 1 umfasst eine beispielhafte Scanvorrichtung 1 gemäß der vorliegenden Erfindung eine Detektoranordnung 3 mit einer Mehrzahl von Detektoren 4, welcher auf einer gemeinsamen Trägerplatte 5 montiert sind. Die Detektoren 4 sind alle senkrecht zur Trägerplatte 5 ausgerichtet. Die Scanvorrichtung 1 umfasst einen (nicht gezeigten) Lichtsender, welcher Licht in die Umgebung der Scanvorrichtung 1 aussendet. Die Scanvorrichtung 1 umfasst auch eine Optik 7 in Gestalt einer einfachen konvexen Linse. Diese Optik 7 ist den Detektoren 4 vorgeschaltet, um (Empfangs-)Licht, welches von einem Objekt 9 ausgeht, in einer spezifischen Art und Weise auf die einzelnen Detektoren 4 zu lenken. Hierdurch wird Licht aus einem bestimmten Bereich vor der Detektoranordnung 1, ihrem sogenannten Sichtfeld (engl. "Field of view (FOV)") auf die Detektoren 4 gelenkt.

Die Scanvorrichtung 1 umfasst im vorliegenden Beispiel ferner ein Scanmodul 11 mit einem Aktuator 13. Der Aktuator 13 ist derart mit der Trägerplatte 5 (und ggf. der Optik 7) gekoppelt, dass er die Detektoranordnung 3 mit all ihren Detektoren 4 (und ggf. die zugehörige Optik 7) um eine festgelegte Rotationsachse RA herum rotieren kann. Daraus ergibt sich für die Scanvorrichtung 1 eine kreisförmige Scanrichtung SR senkrecht zur Bildebene der Fig. 1.

Alternativ hierzu wäre eine rotatorische Scanrichtung SR beispielsweise auch zu erhalten, indem keine Bewegung der Detektoranordnung 3 bzw. ihrer Detektoren 4 erfolgt, sondern diese fest montiert sind und eine rotierbare Abbildungseinheit (nicht dargestellt), insbesondere mit einem Drehspiegel oder einem Facettenspiegelrad, durch den Aktuator 13 angetrieben ist.

Dabei sei darauf hingewiesen, dass die Optik 7 zusätzlich oder alternativ zu der rein schematisch dargestellten Linse andere Linsen und/oder Parabolspiegel umfassen kann. Geeignete Optiken 7 und/oder Abbildungseinheiten zu bilden liegt in den Fähigkeiten eines Fachmanns. Folglich wir hierzu nicht weiter ins Detail gegangen.

Wie Fig. 1 ferner entnommen werden kann, ist das Scanmodul 11 bzw. der Aktuator 13 zumindest ausgangsseitig mit einer weiter vorgesehenen Auswerteinheit 15 der Scanvorrichtung 1 verbunden. Selbiges gilt für die Detektoren 4, was vorliegend der Einfachheit halber über die Verbindung der Trägerplatte 5 mit der Auswerteinheit 15 dargestellt ist. Die Auswerteinheit 15 ist dazu ausgebildet, aus den kombinierten Signalen der einzelnen Detektoren 4 sowie vorliegend unter Berücksichtigung eines Bewegungssignals von dem Aktuator 13 unterschiedliche Informationen zu Objekten 9 innerhalb des Scanbereichs der Scanvorrichtung 1 zu ermitteln. Entsprechende Auswertungsmethoden sind wohlbekannt und werden vorliegend nicht weiter behandelt.

An dieser Stelle sei noch darauf hingewiesen, dass die Auswerteinheit 15 auch gleichzeitig als Steuereinheit für den Aktuator 13 fungieren kann und folglich nicht auf ein Ausgangssignal von der Scaneinheit 11 angewiesen sein muss. Ein Fachmann wird hier unterschiedlichste Wirkzusammenhänge erdenken können. Diese sind für die vorliegende Erfindung jedoch nicht von unmittelbarer Relevanz.

Auch wenn vorliegend der Übersichtlichkeit halber darauf verzichtet wurde, eine Leuchtmittelanordnung darzustellen, ist es möglich, den Grundaufbau der Fig. 1 bei Bedarf um eine solche zu ergänzen. Eine entsprechende Leuchtmittelanordnung ist dabei auf die konkrete Ausgestaltung und Funktionsweise der Detektoranordnung 3 abgestimmt und dient dazu, zumindest das Sichtfeld der Detektoranordnung 3, ggf. auch den gesamten Scanbereich der Scanvorrichtung 1, möglichst gleichmäßig auszuleuchten. Möglichkeiten zur konkreten Umsetzung einer entsprechenden Leuchtmittelanordnung, ggf. mit entsprechenden Optiken, hängen von der konkreten Ausgestaltung und Funktionsweise der übrigen Komponenten der Scanvorrichtung 1 ab. Die Identifizierung und Umsetzung solcher liegt jedoch im Vermögen eines Fachmanns und wird folglich hier nicht weiter behandelt.

Im Folgenden werden anhand der Figuren 2 und 3 zwei beispielhafte Ausgestaltungen für Detektoranordnungen 3 zur Bildung erfindungsgemäßer Scanvorrichtungen 1 beschrieben.

Entsprechend dem ersten Beispiel der Fig. 2 kann eine Detektoranordnung 3 in einer erfindungsgemäßen Scanvorrichtung 1 beispielsweise vier unterschiedliche Detektorarrays 17 umfassen, welche gleichmäßig auf einem gemeinsamen Kreisring angeordnet sind. Im vorliegenden Beispiel handelt es sich bei den vorgesehenen Detektorarrays 17 um vier identisch ausgebildete 1D-Arrays von Detektoren 4. Jeder der Detektoren 4 kann für sich ein Unterarray, beispielsweise aus CMOS-Sensoren oder Avalanche-Photodioden sein.

Ein erstes Detektorarray 17 ist links oben in dem Kreisring vorgesehen und in Bezug auf eine horizontale Radialachse (gestrichelt dargestellt) des Kreisrings in einem erste Winkel α₁ verkippt. Ein zweites Detektorarray 17 ist links unten in dem Kreisring vorgesehen und in Bezug auf die horizontale Radialachse des Kreisrings in einem zweiten Winkel α₂ verkippt. Ein drittes Detektorarray 17 ist rechts unten in dem Kreisring vorgesehen und in Bezug auf die horizontale Radialachse des Kreisrings in einem dritten Winkel α₃ verkippt. Das vierte Detektorarray 17 ist rechts oben in dem Kreisring vorgesehen und in Bezug auf die horizontale Radialachse des Kreisrings in einem vierten Winkel α₄ verkippt. In ihrem Betrag sind die vier Kippwinkel α₁ bis α₄ identisch zueinander. Ferner ist bei genauer Betrachtung zu erkennen (siehe insbesondere die gepunkteten Linien oben und unten), dass einander gegenüberliegende Detektorarrays 17 (vorliegend in Bezug auf die Vertikale) zueinander mit einem Höhenversatz angeordnet sind. Der Höhenversatz ist dabei bevorzugt kleiner als die effektive Pixelhöhe (bezogen auf die Höhe, welche insbesondere quer zur Scanrichtung liegt) der vorgesehenen Detektorarrays 17.

Wie in Fig. 2 ferner dargestellt ist, können die vorgesehenen Detektorarrays 17 den gesamten Kreisring umspannen und dafür jeweils separate Sektoren des Kreisrings abdecken, welche sich höchstens unwesentlichen überschneiden. Die breite B des so definierten Kreisrings ist bevorzugt kleiner gleich einem Bruchteil des halben Innendurchmessers Dᵢ (also des Innenradius) des Kreisrings. Der besagte Innendurchmesser Dᵢ ist bevorzugt größer als die Hälfte des Außendurchmessers Dₐ des Kreisrings. Im Inneren des Kreisrings kann eine Platine mit Bauteilen (nicht dargestellt) vorgesehen sein, welche von den Detektorarrays 17 verschieden sind.

Die vorgesehenen Detektorarrays 17 können identisch zueinander oder voneinander verschieden ausgebildet sein. Bevorzugt umfassen sie jeweils eine Anzahl von Pixeln bzw. Detektoren 4, welche Potenzen von zwei sind (wie beispielsweise 8, 16, 32, 64 etc.).

In Fig. 3 ist ein zweites systematisches Beispiel zur erfindungsgemäßen Spezifizierung der Detektoranordnung 3 einer entsprechenden Scanvorrichtung 1 gezeigt.

Dort sind sechs zueinander identisch ausgebildete Detektorarrays 17 mit jeweils acht linear aneinander gereihten Pixeln bzw. Detektoren 4 auf einem gemeinsamen Kreisring angeordnet. Vier der vorgesehenen Detektorarrays 17 sind aneinander angrenzend entlang der linken Hälfte des Kreisrings angeordnet, während zwei weitere Detektorarray 17 lediglich in einem mittleren Abschnitt der rechten Hälfte des Kreisrings angeordnet sind. Dabei ist zwischen den beiden rechts angeordneten Detektorarrays 17 ein Abstand gebildet (siehe die gepunkteten Linien). Dieser Abstand (bzw. Höhenversatz) ist kleiner als die effektiven Pixelhöhe (also die Höhe der Pixel in ihrer Projektion quer zur Scanrichtung). Damit sind die beiden rechten Detektorarrays 17 in Bezug auf ihre links angeordneten Gegenstücke gegenüberliegend jedoch mit einem entsprechenden Höhenversatz angeordnet.

Ein erster Winkel α₁ des obersten Detektorarrays 17 relativ zur horizontalen Radialachse der Detektoranordnung 3 entspricht im gezeigten Beispiel einem vierten Winkel α₄ des untersten Detektorarrays 17 relativ zur horizontalen Radialachse der Detektoranordnung 17. Die weiteren Winkel α₂, α₃, α₅ und α₆ der übrigen Detektorarrays relativ zur horizontalen Radialachse der Detektoranordnung (welche gleichzeitig die vorgesehen Scanrichtung anzeigt) sind in ihrem Betrag identisch zueinander, aber verschieden von den anderen beiden Winkeln α₁ und α₄. Dies ergibt sich nicht zuletzt aus der Vorgabe, dass die unterschiedlichen Detektorarrays auf dem gemeinsamen Kreisring angeordnet sein müssen.

An dieser Stelle sei darauf hingewiesen, dass es erfindungsgemäß nicht notwendig ist, dass jeder der vorgesehenen Detektorarrays 17 derart in den gemeinsamen Kreisring eingepasst ist, dass dessen Enden den Außenumfang des gemeinsamen Kreisrings aufspannen, während ihr Mittelbereich tangential an dem Innenumfang der gemeinsamen Kreisrings anliegt. Andererseits sind jedoch nur solche Ausgestaltungen als erfindungsgemäß zu betrachten, in welchen die unterschiedlichen Detektorarrays 17 der Detektoranordnung 3 tatsächlich einen Kreisring aufspannen, wie dies in den beiden Figuren 2 und 3 beispielhaft gezeigt ist. Ausgestaltungen, bei welchen unterschiedliche Detektorarrays im Wesentlichen ein Rechteck oder einen flächigen Kreis (im breitesten Sinne einen Kreisring mit einem vernachlässigbar kleinen Innendurchmesser) aufspannen, sind ausdrücklich nicht als erfindungsgemäß zu betrachten.

Ferner wird noch einmal hervorgehoben, dass unter der Formulierung Detektorarray ein kombiniertes Bauteil bzw. Modul mit einer Mehrzahl von dicht gepackten Detektoren verstanden wird und nicht lediglich eine lose Ansammlung mehrerer für sich unabhängiger einzelner Detektoren.

### Bezugszeichenliste

- 1: Scanvorrichtung
- 3: Detektoranordnung
- 4: Detektor
- 5: Trägerplatte
- 7: Optik/ Linse
- 9: Objekt
- 11: Scanmodul
- 13: Aktuator
- 15: Auswerteinheit
- 17: Detektorarray

- B: Breite des Kreisrings
- Dₐ: Innendurchmesser des Kreisrings
- Dᵢ: Außendurchmesser des Kreisrings
- RA: Rotationsachse
- SR: Scanrichtung

## Patentansprüche

1. Scanvorrichtung (1), insbesondere Laserscanner, wobei die Scanvorrichtung (1) umfasst:
eine Detektoranordnung (3) mit einer Mehrzahl von optischen Detektoren (4);
ein Scanmodul (11), welches dazu ausgebildet ist, die Position und/oder Ausrichtung des Sichtfelds der Detektoranordnung (3) zu variieren, um einen entsprechenden Scanbereich zu definieren; und
eine Auswerteinheit (15), welche dazu ausgebildet ist, aus den kombinierten Detektionssignalen der Detektoren (4) der Detektoranordnung (3) Informationen zu Objekten im Scanbereich der Scanvorrichtung (1) zu gewinnen;
**dadurch gekennzeichnet, dass**
die optischen Detektoren (4) der Detektoranordnung (3) in Gestalt wenigstens zweier identisch zueinander ausgerichteter Detektorarrays (17) mit jeweils wenigstens drei linear aneinander gereihten optischen Detektoren (4) ausgebildet sind und
die besagten Detektorarrays (17) auf einem gemeinsamen Kreisring angeordnet sind, welcher sich senkrecht zur gemeinsamen Ausrichtung der besagten Detektorarrays (17) erstreckt.

2. Scanvorrichtung nach Anspruch 1,
wobei es sich bei den Detektorarrays der Detektoranordnung um 1D-Arrays, insbesondere jeweils auf einem einzelnen Halbleitersubstrat, wobei die einzelnen Detektoren insbesondere in Gestalt von nicht aufgelösten Unterarrays von CMOS-Sensoren und/oder von Avalanche-Photodioden ausgebildet sind.

3. Scanvorrichtung (1) nach Anspruch 1 oder 2,
wobei die Detektorarrays (17) der Detektoranordnung (3) jeweils 16 bis 128, beispielsweise 64 ,Pixel oder Detektoren (4) umfassen, jeweils insbesondere mit einer Länge von wenigen Millimetern, beispielsweise von 1mm bis 20mm,
wobei der Außendurchmesser (Dₐ) des gemeinsamen Kreisrings bevorzugt wenige Zentimeter, insbesondere 1cm bis 5cm beträgt.

4. Scanvorrichtung (1) nach einem der vorstehenden Ansprüche,
wobei innerhalb des gemeinsamen Kreisrings der Detektorarrays (17) eine Platine vorgesehen ist, welche elektronische Bauteile umfasst, welche von den Detektorarrays (17) verschieden sind.

5. Scanvorrichtung (1) nach einem der vorstehenden Ansprüche,
wobei die Detektorarrays (17) der Detektoranordnung (3) auf dem gemeinsamen Kreisring derart angeordnet sind, dass diese in wenigstens einer Querprojektion des gemeinsamen Kreisrings dessen gesamten Außendurchmesser (Dₐ) überspannen.

6. Scanvorrichtung (1) nach einem der vorstehenden Ansprüche,
wobei die Detektoranordnung (3) mehr als zwei Detektorarrays (17), insbesondere ein gerades Vielfaches an Detektorarrays (17), wie beispielsweise vier, sechs oder acht entsprechende Detektorarrays (17), umfasst, welche auf dem gemeinsamen Kreisring angeordnet sind.

7. Scanvorrichtung (1) nach einem der vorstehenden Ansprüche, wobei die Detektorarrays (17) der Detektoranordnung (3) derart angeordnet sind, dass
die Breite (B) des aufgespannten gemeinsamen Kreisrings kleiner-gleich der Hälfte, einem Drittel, einem Viertel und/oder einem Fünftel des halben Innendurchmessers (Dᵢ) des aufgespannten Kreisrings ist; und/oder der Innendurchmesser (Dᵢ) des aufgespannten gemeinsamen Kreisrings größer als die Hälfte, zwei Drittel und/oder fünf Sechstel des Außendurchmessers (Dₐ) des aufgespannten Kreisrings ist.

8. Scanvorrichtung (1) nach einem der vorstehenden Ansprüche,
wobei die Detektorarrays (17) der Detektoranordnung (3) gleichmäßig entlang wenigstens einer Hälfte des Umfangs des gemeinsamen Kreisrings, insbesondere entlang des gesamten Umfangs des gemeinsamen Kreisrings angeordnet sind.

9. Scanvorrichtung (1) nach einem der vorstehenden Ansprüche,
wobei wenigstens zwei Detektorarrays (17) der Detektoranordnung (3) relativ zu einer Radialachse des gemeinsamen Kreisrings einander gegenüberliegend angeordnet sind, in Bezug auf die besagte Radialachse betrachtet jedoch insbesondere in einem Höhenversatz, welcher kleiner als die effektive Pixelhöhe quer zu dieser Radialachse ist.

10. Scanvorrichtung (1) nach einem der vorstehenden Ansprüche, wobei die unterschiedlichen Detektorarrays (17) der Detektoranordnung (3) über verschiedene Sektoren des gemeinsamen Kreisrings gespannt sind,
wobei sich die unterschiedlichen derart aufgespannten Sektoren insbesondere nicht oder nicht wesentlich überschneiden und/oder einen geschlossenen Kreisring definieren.

11. Scanvorrichtung (1) nach einem der vorstehenden Ansprüche,
wobei wenigstens zwei Detektorarrays (17) gegenüber wenigstens einer Radialachse des gemeinsamen Kreisrings in zwei unterschiedlichen Winkeln (α₁ bis α₆) angeordnet sind, wobei sich die beiden unterschiedlichen Winkel (α₁ bis a₆) in Bezug auf die besagte Radialachse insbesondere lediglich in ihrem Vorzeichen voneinander unterscheiden.

12. Scanvorrichtung (1) nach einem der vorstehenden Ansprüche,
wobei das Scanmodul (11) wenigstens einen Aktuator (13) zur unmittelbaren Bewegung der Detektorarrays (17) der Detektoranordnung (3) und/oder eine Abbildungseinheit, insbesondere mit einem Drehspiegel oder einem Facettenspiegelrad, sowie wenigstens einen zugehörigen Aktuator umfasst, um lediglich das Sichtfeld der Detektoranordnung (3), insbesondere periodisch und insbesondere im Wesentlichen rotatorisch, zu verfahren.

13. Scanvorrichtung (1) nach einem der vorstehenden Ansprüche,
wobei die Scanvorrichtung (1) eine Leuchtmittelanordnung umfasst, welche dazu ausgebildet ist, den Scanbereich der Scanvorrichtung (1) auszuleuchten,
wobei die Leuchtmittelanordnung derart ausgebildet ist und/oder mit einer zugehörigen Abbildungseinheit ausgestattet ist, dass diese im Wesentlichen lediglich das Sichtfeld der Detektoranordnung (3) ausleuchtet.

14. Scanvorrichtung (1) nach Anspruch 13,
wobei die Leuchtmittelanordnung wenigstens ein Leuchtmittel umfasst, welches entsprechend wenigstens einem der vorgesehenen Detektorarrays (17) und/oder des gemeinsamen Kreisrings der Detektorarrays (17) der Detektoranordnung (3) angeordnet ist.

15. Scanvorrichtung (1) nach einem der vorstehenden Ansprüche, umfassend wenigstens eine Optik (7), insbesondere mit wenigstens, insbesondere genau, einer Linse und/oder wenigstens einem Parabolspiegel und insbesondere wenigsten ein Feldblendenarray welches zwischen der Optik (7) und der Detektoranordnung in der Fokalebene der Optik (7) positioniert ist.
